# EUROPEAN PATENT APPLICATION

(11) **EP 4 667 288 A1**
(43) Date of publication of application: **24.12.2025**
(21) Application number: 25183723.3
(22) Date of filing: 18.06.2025
(51) Int. Cl.: B60R 1/04, B60R 1/26, B60R 1/12

(54) **CHROME RING FOR DETECTING A FLIPPED IMAGE ORIENTATION ON A FULL DISPLAY MIRROR**

(30) Priority: 19.06.2024 US 202463661684 P; 05.06.2025 US 202519229256
(71) Applicant: Gentex Corporation, Zeeland, MI 49464 (US)
(72) Inventor: Roth, Mark R., Zeeland, MI 49464 (US)
(74) Representative: Müller-Boré & Partner Patentanwälte PartG mbB

(57) **Abstract**

A full display mirror assembly (10) includes a first substrate (14) having a first surface (16) and a second surface (18) opposite the first surface (16). A display element (20) is defined by an outer perimeter (22) and located behind the first substrate (14). The display element (20) is configured to occasionally rotate a generated image (24) between an accurate image orientation (26A) and a flipped image orientation (26B) during a calibration process. The generated image (24) includes a constant indicia element (28) proximate the outer perimeter (22). A concealing body (30) is aligned with and covers the constant indicia element (28) in the accurate image orientation (26A) and is misaligned with and reveals the constant indicia element (28) in the flipped image orientation (26B).

## Description

### CRoss-REFERENCE TO RELATED APPLICATION

This application claims priority to and the benefit under 35 U.S.C. § 119(e) of U.S. Provisional Application No. 63/661,684, filed on June 19, 2024, entitled "CHROME RING FDM ORIENTATION CONFIRMATION," the disclosure of which is hereby incorporated herein by reference in its entirety.

### FIELD OF THE DISCLOSURE

The present disclosure generally relates to a full display mirror assembly including a display element with a light feature that indicates if an image generated on the display element has been flipped during calibration.

### SUMMARY OF THE DISCLOSURE

According to one aspect of the present disclosure, a full display mirror assembly includes a first substrate having a first surface and a second surface opposite the first surface. A display element is defined by an outer perimeter and located behind the first substrate. The display element is configured to occasionally rotate a generated image between an accurate image orientation and a flipped image orientation during a calibration process. The generated image includes a constant indicia element proximate the outer perimeter. A concealing body is aligned with and covers the constant indicia element in the accurate image orientation and is misaligned with and reveals the constant indicia element in the flipped image orientation.

According to another aspect of the present disclosure, a full display mirror assembly includes at least one camera configured to capture image data. A display element is in operable communication with the at least one camera and configured to generate the image data, the generated image data including a constant indicia element in a non-central position of the display element. A control system in operable communication with the display element and configured to occasionally rotate the generated image data with the constant indicia element between an accurate image orientation and a flipped image orientation during a calibration process. A concealing body is aligned with and covers the constant indicia element in the accurate image orientation and is misaligned with and reveals the constant indicia element in the flipped image orientation.

According to yet another aspect of the present disclosure, a full display mirror assembly includes at least one camera configured to capture image data and an electro-optic assembly configured to switch transmissive states upon an applied voltage. A display element is defined by an outer perimeter and located behind the electro-optic assembly. The display element is configured to generate the image data with a constant indicia element proximate the outer perimeter. The constant indicia element includes a coloration. A control system is in operable communication with the display element. The control system is configured to monitor pixel coloration information of the image data surrounding the constant indicia element and detect that the coloration of the constant indicia element is similar to the pixel coloration information within a threshold making recognition of the constant indicia element difficult by an end user. The control system is further configured to change the coloration of the constant indicia element to be dissimilar to the pixel coloration information outside of the threshold.

The present disclosure generally provides a full display mirror assembly including a display element. The display element may be associated with one or more cameras such that the display element generates image data (e.g., captured images) from the one or more cameras. The full display mirror is configured to generate the image data with a constant indicia element that indicates if the image data generated on the display element has been flipped during a calibration process. More particularly, calibration processes may occur during initial installation, a hard restart, and other scenarios. Depending on the vehicular architecture, the number of cameras, which camera is currently supplying the image data and/or the configurations of related control systems, the reproduction of the image data can sometimes be generated in a flipped image orientation. In this manner, the full display mirror utilizes the constant indicia element to notify a user if the displayed image is in the flipped image orientation for accurate interpretation by the user.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top plan view of a vehicle that incorporates a full display mirror assembly with a display element configured to generate a generated image with a constant indicia element, according to an aspect of the present disclosure;
FIG. 2A is a front view of a full display mirror assembly with a display element generating an accurate image orientation with a constant indicia element obscured by a concealing body, according to an aspect of the present disclosure;
FIG. 2B is a front view of a full display mirror assembly with a display element generating a generated image a flipped image orientation with a constant indicia element revealed, according to an aspect of the present disclosure;
FIG. 3A is a cross-sectional view of a full display mirror assembly with a display element configured to generate a generated image with a constant indicia element in a first position, according to an aspect of the present disclosure;
FIG. 3B is a cross-sectional view of a full display mirror assembly with a display element configured to generate a generated image with a constant indicia element in alternative positions, according to an aspect of the present disclosure;
FIG. 4 is a front view of a full display mirror assembly with a display element and a concealing body, according to an aspect of the present disclosure; and
FIG. 5 is a schematic view of a control system of a fully display mirror, according to an aspect of the present disclosure.

### DETAILED DESCRIPTION

The present illustrated embodiments reside primarily in combinations of method steps and apparatus components related to a full display mirror assembly including a display element with a light feature that indicates if an image generated on the display element has been flipped during calibration. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

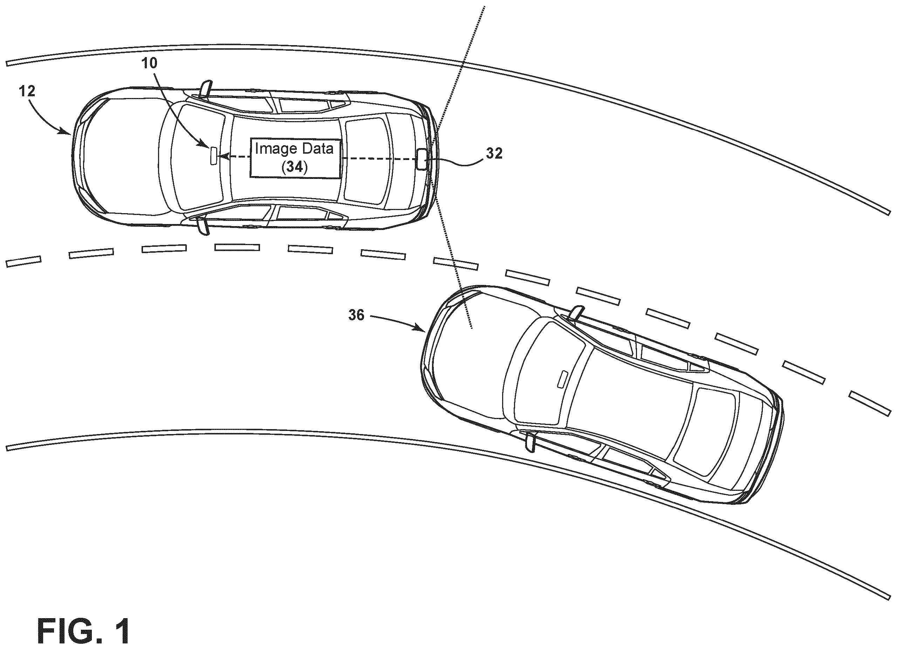

For purposes of description herein, the terms "upper," "lower," "right," "left," "rear," "front," "vertical," "horizontal," and derivatives thereof, shall relate to the disclosure as oriented in FIG. 1. Unless stated otherwise, the term "front" shall refer to the surface of the device closer to an intended viewer of the device, and the term "rear" shall refer to the surface of the device further from the intended viewer of the device. However, it is to be understood that the disclosure may assume various alternative orientations, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

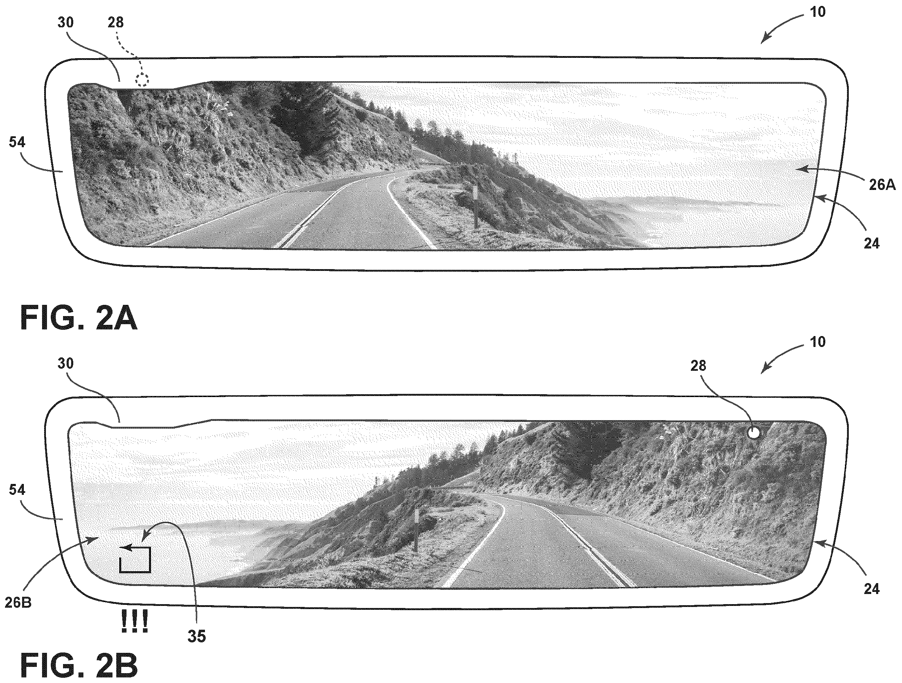

Referring initially to FIGS. 1-2B, reference numeral 10 generally designates a full display mirror assembly. The full display mirror assembly 10 may be utilized with a transportation vessel, such as a vehicle 12. The full display mirror assembly includes 10 a first substrate 14 having a first surface 16 and a second surface 18 opposite the first surface 16. A display element 20 is defined by an outer perimeter 22 and located behind the first substrate 14. The display element 20 is configured to occasionally rotate a generated image 24 between an accurate image orientation 26A (FIG. 2A) and a flipped image orientation 26B (FIG. 2B) during a calibration process. The generated image 24 includes a constant indicia element 28 proximate the outer perimeter 22. A concealing body 30 is aligned with and covers the constant indicia element 28 in the accurate image orientation 26A and is misaligned with and reveals the constant indicia element 28 in the flipped image orientation 26B.

The covering and revealing of the constant indicia element 28 can be utilized to determine if the generated image 24 is in the accurate image orientation 26A or the flipped image orientation 26B. In this manner, the indicia element 28 functions as a notification so that a user can accurately interpret the generated image 24. Such functionality can be of particular importance when the full display mirror assembly 10 includes or is otherwise in communication with one or more cameras 32 configured to capture image data 34 around the transportation vessel (e.g., an associated vehicle 12) and the generated image 24 is a reproduction of the image data 34.

The one or more cameras 32 can be oriented to capture image data 34 of environmental locations around the vehicle 12, such as locations in a rearward and/or cross-car direction of the vehicle 12. For example, the one or more cameras 32 can be oriented to capture image data 34 in blind spots around the vehicle 12. While FIG. 1 depicts a camera 32 on a rear surface of the vehicle 12, it should be appreciated that the camera 32 and additional cameras 32 may be located in other regions in and around the vehicle 12. For example, the one or more cameras 32 may be located on side mirrors, side surfaces of the vehicle 12, top surfaces of the vehicle 12, bottom surfaces of the vehicle 12, and/or interior surfaces of the vehicle 12. In the event that an object 36, such as another vehicle, is captured in the image data 34, it is important that a driver can quickly and accurately interpret the generated image 24 on the display element 20 as having the accurate image orientation 26A or the flipped image orientation 26B. In this manner, the constant indicia element 28 may function as a safety feature for a driver.

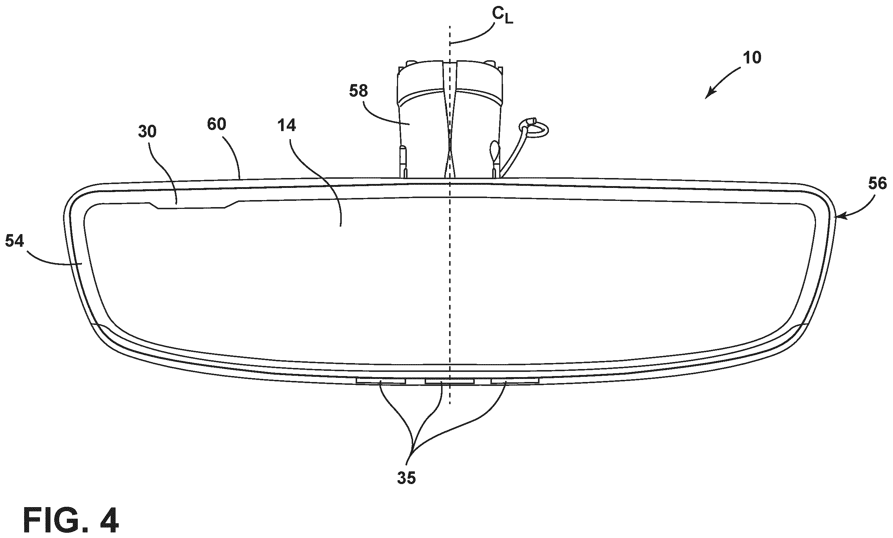

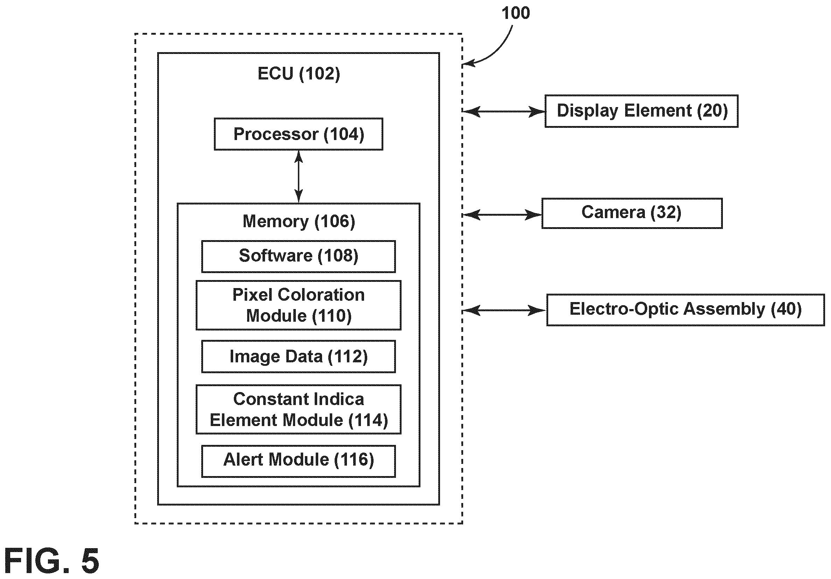

During initial installation, a hard restart, and other scenarios, the full display mirror assembly 10 may undergo the calibration process. Depending on the vehicular architecture, the number of cameras 32, which camera 32 is currently supplying the image data 34 to the display element 20, and/or the control systems involved, the reproduction of the image data 34 in the generated image 24 can sometimes be generated in the flipped image orientation 26B. In this manner, the constant indicia element 28 notifies a user when the generated image 24 is generated in the flipped image orientation 26B for both accurate interpretation by the user and a notification to take corrective action. For example, the corrective action may include utilizing a user interface 35 (FIGS. 2B and 4) to switch the generated image 24 from the flipped image orientation 26B to the accurate image orientation 26A, servicing the vehicle 12, the like, and/or combinations thereof. As depicted in FIG. 2B the user interface 35 may be configured as a touch interface on a viewing surface of the full display mirror 10. A control system (FIG. 5) may be configured to monitor the location of the constant indicia element 28 or other image data to determine that the generated image is in the flipped image orientation 26B. Upon detecting that the generated image is in the flipped image orientation 26B, the control system 100 may generate an indicia on the user interface 35 (e.g., via the display element 20) that allows a user to interact and quickly reset the generated image back to the accurate image orientation 26A upon interfacing with the indicia. The indicia may be generated with one or more audible alerts depicted in FIG. 2B as a series of exclamation marks. The audible alert may be generated by an audio system in the full display rearview mirror assembly 10 and/or an audio system of an associated vehicle (not shown).

The display element 20 may generate the constant indicia element 28 with a coloration in a variety of colors, hues, shapes, brightness, and/or intensities. In some embodiments, the constant indicia element 28 has a greater intensity than surrounding portions of the generated image 24. In some embodiments, the constant indicia element 28 has a coloration that is different than surrounding portions (e.g., pixels) of the generated image 24. For example, the coloration of the constant indicia element 28 may be a color not generally present in the environment, such as orange, red, pink, or yellow. In still further examples, the control system 100 may be configured to detect pixel coloration information surrounding the constant indicia element 28 and generate an instruction to change the color, hue, brightness, and/or intensity for increased contrast.

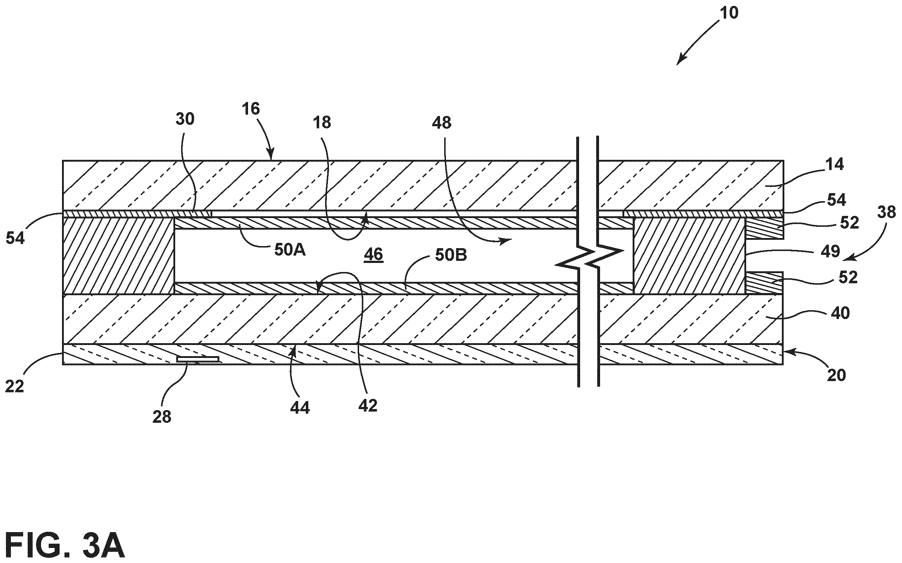

With reference now to FIG. 3A, the full display mirror assembly 10 may include an electro-optic assembly 38 located between the display element 20 and the first surface 16. More particularly, the full display mirror assembly includes a second substrate 40 having a third surface 42 and a fourth surface 44 opposite the third surface 42. The first and second substrates 14, 40 may be disposed in a parallel and spaced apart relationship so as to define a cavity 46 therebetween. The second and third surfaces 18, 42 face each other. An electro-optic medium 48 is located in the cavity 46 and confined by seal 49 that delimits the cavity 46 between the first and second substrates 14, 40. The electro-optic medium 48 is configured to change a degree of transmissiveness as a result of an applied electrical potential. A first electrode layer 50A may be located on the second surface 18 and a second electrode layer 50B may be located on the third surface 42. The display element 20 may be located behind the fourth surface 44.

The first electrode layer 50A and the second electrode layer 50B may be formed by electrically conductive transparent materials, including, but not limited to, a transparent conducting film (e.g., indium tin oxide (ITO), F:SnO2, ZnO, IZO), insulator-metal-insulator ("IMI") Structures, carbon (graphene and/or graphite), and/or a conductive metal mesh (e.g., nanowires). In various examples, the electro-optic medium 48 may include at least one solvent, at least one anodic material, and at least one cathodic material. Typically, both of the anodic and cathodic materials are electroactive and at least one of them may be electrochromic. It will be understood that regardless of its ordinary meaning, the term "electroactive" may mean a material that undergoes a modification in its oxidation state upon exposure to a particular electrical potential difference. Additionally, it will be understood that the term "electrochromic" may mean, regardless of its ordinary meaning, a material that exhibits a change in its extinction coefficient at one or more wavelengths upon exposure to a particular electrical potential difference.

An electric bus 52 may at least partially travel along a peripheral edge of the cavity 46. For example, the electric bus 52 may include a conductive adhesive, conductive epoxy, conductive ink, metal strips or clips, conductive tape, and/or the like, that may include a higher electric conductivity than one or both of the first electrode layer 50A and the second electrode layer 50B. The electric bus 52 may be placed on an internal surface (e.g., a surface that faces towards the cavity 46) of the first electrode layer 50A and/or the second electrode layer 50B or the electric bus 52 may be placed on an outer surface (e.g., a surface that faces away from the cavity 46) of the first electrode layer 50A and/or the second electrode layer 50B. In some instances, the electric bus 52 may transverse an entire perimeter of the cavity 46 or may be localized to one or more discrete locations.

A concealment layer 54 may be located on one or more surfaces 16, 18 of the first substrate 14 and/or between the seal 49 and the first surface 16 to cover the seal 49 from the end-consumer view (e.g., in a direction of the first surface 16). The concealment layer 54 is illustrated as having a thickness between bounding surfaces, however, it should be appreciated that the concealment layer 54 may be formed into or integral with the first substrates 14 so as to remain substantially flush therewith. The concealment layer 54 may be ring-shaped. The concealment layer 54 may be a glass frit that is integral with the first substrate 14. In other embodiments, the concealment layer 54 may be non-integral. For example, the concealment layer 54 may be reflective (e.g., chrome layer) or opaque layer. The concealment layer 54 may cover the entirety or part of the seal 49. In some embodiments, the outer perimeter 22 of the display element 20 extends to or past the seal 49.

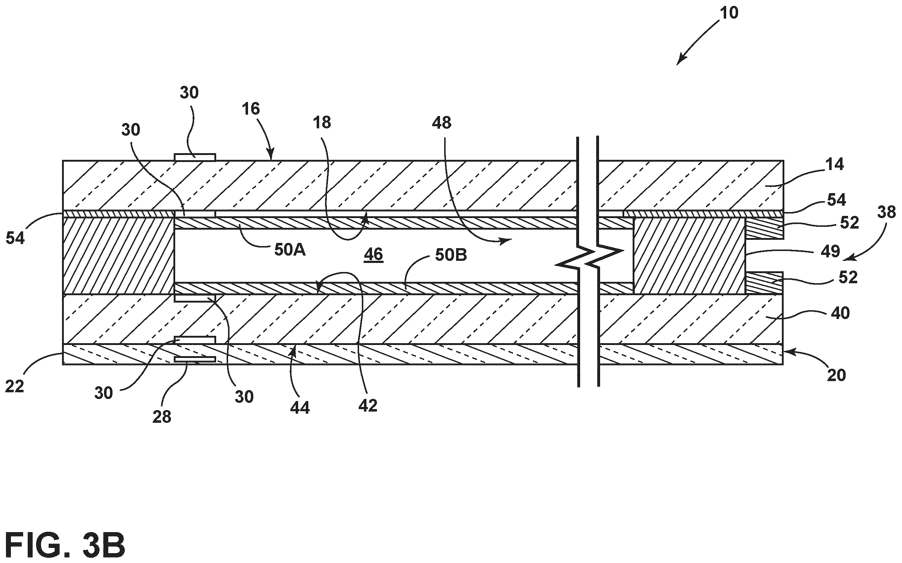

With reference now to FIGS. 3A and 3B, in some embodiments, the concealing body 30 is integral with the concealment layer 54. More particularly, the concealing body 30 is depicted as a peninsula extending from and co-formed the concealment layer 54. In this manner, the concealing body 30 may be a glass frit that is integral (e.g., with the concealment layer 54) with the first substrate 14. In other embodiments, the concealing body 30 (e.g., with the concealment layer 54) may be reflective (e.g., chrome) or opaque. In other embodiments, such as the construction depicted in FIG. 3B, the concealing body 30 may be non-integral with the concealment layer 54. More particularly, the concealing body 30 may be a glass frit that is integral with the first substrate 14 or the second substrate 40 (e.g., the third or fourth surfaces 42, 44). In other embodiments, the concealing body 30 may be reflective (e.g., chrome) or opaque and located anywhere between the display element 20 and the first surface 16 or on the first surface 16. In some embodiments, the concealing body 30 may be located between the concealment layer 54 and the display element 20. In some embodiments, the concealing body 30 at least partially overlaps the concealment layer 54. In this manner, the concealing body 30 and the concealment layer 54 appear to be generally co-extensive to an end-user.

Referring now to FIG. 4, the full display mirror assembly 10 may include a rearview housing 56 that supports the electro-optic assembly 38 and the display element 20 and a rearview mounting member 58 that is configured to mount the rearview housing 56 to an interior cabin of the vehicle 12. In some embodiments, the housing 56 may define a bezel 60 that extends around a perimeter of the optical stack (e.g., the substrates 14, 40), the electro-optic assembly 38, and the outer perimeter of the display element 20. In some embodiments, the concealing body 30 may be co-formed with and/or otherwise extend from the bezel 60. In this manner, the outer perimeter 22 of the display element 20 may extend to or past the seal 49 and the bezel 60. In FIG. 4 the user interface 35 is depicted as a series of buttons located on the rearview housing 56 (e.g., the bezel 60). The buttons may be present in addition to or alternatively from the touch configuration of the user interface 35. In some implementations, the control system 100 may be configured to generate a graphic above the buttons to, upon detecting that the generated image is in the flipped image orientation 26B, generate an indicia on the display element 20 aligned with an appropriate one of the buttons. The appropriate button may correspond to resetting the generated image back to the accurate image orientation 26A. In some implementations, the buttons may include one or more lighting elements integrated therein and the indicia may be illuminating the one or more lighting elements associated with the appropriate buttons. The indicia may be generated with one or more audible alerts as described previously.

In the depicted arrangement, the concealing body 30 is located proximate the outer perimeter 22 of the display element 20 near an upper edge. However, it should be appreciated that the concealing body 30 may be in locations other than those depicted. For example, the rearview mirror assembly 10 (e.g., the display element 20) may be located in a non-central position of the display element 20 such that when the image is flipped, the constant indicia element 28 changes position on the display element 20. For example, the display element 20 extends from a centerline "C_{L}" equally to a left side and a right side and the concealing body 30 and the constant indicia element 28 may be spaced from the centerline C_{L}.

With reference to FIG. 5, the control system 100 is associated, for example, with the one or more components of the full display mirror assembly 10, such as the display element 20, the one or more cameras 32, and the electro-optic assembly 38. The control system 100 may include an electronic control unit (ECU) 102. The ECU 102 may include the processor 104 and the memory 106. The processor 104 may include any suitable processor 104. Additionally, or alternatively, the ECU 102 may include any suitable number of processors (e.g., located in one or more components of the full display mirror assembly 10 and/or the vehicle 12), in addition to or other than the processor 104. The memory 106 may comprise a single disk or a plurality of disks (e.g., hard drives), and includes a storage management module that manages one or more partitions within the memory 106. In some embodiments, the memory 106 may include flash memory, semiconductor (solid state) memory or the like. The memory 106 may include Random Access Memory (RAM), a Read-Only Memory (ROM), or a combination thereof. The memory 106 may include instructions that, when executed by the processor 104, cause the processor 104 to, at least, perform the functions and method steps as described herein. The display element 20, the one or more cameras 32, and the electro-optic assembly 38 may, therefore, be controlled, receive inputs, and/or transmit inputs in relation to the ECU 102. The ECU 102 may receive and/or the memory 106 may save software 108, a pixel coloration module 110, image data 112 captured by the one or more cameras 32, a constant indicia element module 114, and an alert generation module 116.

The software 108 may include data upgradable via user inputs or a remote device. For example, the size or shape of the constant indicia element 28, types of indicia generated on the user interface 35, and associated inputs to the user interface 35 may be updated. The software 108 may further include detailed information on the full display mirror 10 (e.g., type, module, and construction). The pixel coloration module 110 may include instructions for detecting and quantifying pixel coloration information of the image data surrounding the constant indicia element 28. The pixel coloration module 110 may further include coloration information and/or detection instructions for the coloration information of the constant indicia element 28 that can be compared to the pixel coloration information of the image data surrounding the constant indicia element 28. In operation, the pixel coloration module 110 may detect if the coloration of the constant indicia element 28 is similar to the pixel coloration information within a threshold. The threshold may be associated with a level of similarity where recognition of the constant indicia element is difficult for an end user. The pixel coloration module 110 may further include instructions to change the coloration of the constant indicia element 28 to be dissimilar to the pixel coloration information outside of the threshold (i.e., with a high enough contrast that the constant indicia element 28 is quickly recognizable by the user). The pixel coloration information may be obtained by the image data 112, which may include images captured by the one or more cameras 32.

The constant indicia element module 114 may include instructions on the location, size, shape, and color of the constant indicia element 28. For example, the location and size of the concealing body 30 may be different in a variety of implementations and models of the full display mirror 10. In this manner, the constant indicia element module 114 may be utilized to automatically determine and implement the appropriate characteristics of the constant indicia element 28 based on the type, model, and/or size of the full display mirror 10 (e.g., as obtained by software 108) and the location of the concealing body 30. In some implementations, the constant indicia element module 114 includes instructions for permitting a user to determine and implement the appropriate characteristics of the constant indicia element 28 via the user interface 35 (e.g., touch configuration and/or buttons). In some implementations, the constant indicia element module 114 may include instructions to detect which pixels are generating the constant indicia element 28 and associate the pixels with the accurate image orientation 26A or the flipped image orientation 26B.

The alert generation module 116 may include instructions with conditions to generate alerts (e.g., audible or visual). For example, upon detecting that the image data is in the flipped image orientation 26B (e.g., via detecting pixel locations associated with the constant indicia element 28). The alert generation module 116 may include instructions to generate (e.g., on the display element 20) an indicia (FIG. 2B), textual information that the image data is flipped, and/or an audible alert as described herein.

The disclosure herein is further summarized in the following paragraphs and is further characterized by combinations of any and all of the various aspects described therein.

According to one aspect of the present disclosure, a full display mirror assembly includes a first substrate having a first surface and a second surface opposite the first surface. A display element is defined by an outer perimeter and located behind the first substrate. The display element is configured to occasionally rotate a generated image between an accurate image orientation and a flipped image orientation during a calibration process. The generated image includes a constant indicia element proximate the outer perimeter. A concealing body is aligned with and covers the constant indicia element in the accurate image orientation and is misaligned with and reveals the constant indicia element in the flipped image orientation.

According to another aspect, a full display mirror assembly includes a second substrate having a third surface and a fourth surface opposite the third surface. The first and second substrates disposed in a parallel and spaced apart relationship so as to define a cavity therebetween. The second and third surfaces face each other. An electro-optic medium is located in the cavity and confined by a seal and configured to change a degree of transmissiveness as a result of an applied electrical potential. A first electrode layer is located on the second surface and a second electrode layer is located on the third surface.

According to yet another aspect, the display element is located behind the fourth surface.

According to still another aspect, a concealment layer is aligned with and covers the seal.

According to another aspect, the concealment layer is a chrome ring.

According to yet another aspect, the concealing body is integral with the concealment layer.

According to still another aspect, the concealing body at least partially overlaps the concealment layer.

According to yet another aspect, the concealing body is located between the concealment layer and the display element.

According to still another aspect, a camera is configured to capture image data around an associated vehicle and the generated image is a reproduction of the image data.

According to another aspect of the present disclosure, a full display mirror assembly includes at least one camera configured to capture image data. A display element is in operable communication with the at least one camera and configured to generate the image data, the generated image data including a constant indicia element in a non-central position of the display element. A control system in operable communication with the display element and configured to occasionally rotate the generated image data with the constant indicia element between an accurate image orientation and a flipped image orientation during a calibration process. A concealing body is aligned with and covers the constant indicia element in the accurate image orientation and is misaligned with and reveals the constant indicia element in the flipped image orientation.

According to another aspect, a concealing layer extends substantially entirely around a perimeter of the display element, and the concealing body is integrally formed with the concealing layer.

According to yet another aspect, the concealing body extends inwardly relative to the perimeter of the display element as a peninsula of the concealment layer.

According to still yet another aspect, the display element extends from a centerline equally to a left side and a right side and the concealing body is spaced from the centerline.

According to another aspect, a full display mirror includes an electro-optic assembly configured to switch transmissive states upon an applied voltage, the display element located behind the electro-optic assembly.

According to yet another aspect, the electro-optic assembly includes a seal and the concealment layer overlays and substantially obscures the seal.

According to yet another aspect of the present disclosure, a full display mirror assembly includes at least one camera configured to capture image data and an electro-optic assembly configured to switch transmissive states upon an applied voltage. A display element is defined by an outer perimeter and located behind the electro-optic assembly. The display element is configured to generate the image data with a constant indicia element proximate the outer perimeter. The constant indicia element includes a coloration. A control system is in operable communication with the display element. The control system is configured to monitor pixel coloration information of the image data surrounding the constant indicia element and detect that the coloration of the constant indicia element is similar to the pixel coloration information within a threshold making recognition of the constant indicia element difficult by an end user. The control system is further configured to change the coloration of the constant indicia element to be dissimilar to the pixel coloration information outside of the threshold.

According to another aspect, a control system is configured to occasionally rotate the generated image data with the constant indicia element between an accurate image orientation and a flipped image orientation during a calibration process.

According to yet another aspect, a concealing body is aligned with and covers the constant indicia element in the accurate image orientation and misaligned with and reveals the constant indicia element in the flipped image orientation.

According to still yet another aspect, the concealing body is formed between the display element and a viewing surface.

According to another aspect, the concealing body is integrally formed with a concealing layer extending substantially entirely around the outer perimeter of the display element.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

It is also to be understood that variations and modifications can be made on the aforementioned structures and methods without departing from the concepts of the present disclosure, and further it is to be understood that such concepts are intended to be covered by the following claims unless these claims by their language expressly state otherwise.

## Claims

1. A full display mirror assembly (10) comprising:
a first substrate (14) having a first surface (16) and a second surface (18) opposite the first surface (16);
a display element (20) defined by an outer perimeter (22) and located behind the first substrate (14), the display element (20) configured to occasionally rotate a generated image (24) between an accurate image orientation (26A) and a flipped image orientation (26B) during a calibration process, the generated image (24) including a constant indicia element (28) proximate the outer perimeter (22); and
a concealing body (30) aligned with and covering the constant indicia element (28) in the accurate image orientation (26A) and misaligned with and revealing the constant indicia element (28) in the flipped image orientation (26B).

2. The full display mirror assembly (10) according to claim 1, further comprising:
a second substrate (40) having a third surface (42) and a fourth surface (44) opposite the third surface (42), the first and second substrates (14, 40) disposed in a parallel and spaced apart relationship so as to define a cavity (46) therebetween, the second and third surfaces (18, 42) facing each other;
an electro-optic medium (48) located in the cavity (46) and confined by seal (49) and configured to change a degree of transmissiveness as a result of an applied electrical potential; and
a first electrode layer (50A) located on the second surface (18) and a second electrode layer (50B) located on the third surface (42).

3. The full display mirror assembly (10) according to claim 2, wherein the display element (20) is located behind the fourth surface (44).

4. The full display mirror assembly (10) as in claim 2 or claim 3, wherein a concealment layer (54) is aligned with and covers the seal (49).

5. The full display mirror assembly (10) according to claim 4, wherein the concealment layer (54) is a chrome ring.

6. The full display mirror assembly (10) according to claim 4 or 5, wherein the concealing body (30) is integral with the concealment layer (54).

7. The full display mirror assembly (10) according to any one of claims 4 to 6, wherein the concealing body (30) extends inwardly relative to the perimeter of the display element (20) as a peninsula of the concealment layer (54).

8. The full display mirror assembly (10) according to any one of claims 4 to 7, wherein the concealing body (30) at least partially overlaps the concealment layer (54).

9. The full display mirror assembly (10) according to any one of claims 4 to 8, wherein the concealing body (30) is located between the concealment layer (54) and the display element (20).

10. The full display mirror assembly (10) according to any one of claims 1 to 9, further including a camera (32) configured to capture image data (34) around an associated vehicle (12) and the generated image (24) is a reproduction of the image data (34).

11. The full display mirror assembly (10) according to any one of claims 1 to 10, wherein the display element (20) extends from a centerline equally to a left side and a right side and the concealing body (30) is spaced from the centerline.

12. The full display mirror assembly (10) according to any one of claims 1 to 11, further including a control system (100) in operable communication with the display element (20) and configured to:
monitor pixel coloration information of the image data (34) surrounding the constant indicia element (28);
detect that the coloration of the constant indicia element (28) is similar to the pixel coloration information within a threshold making recognition of the constant indicia element (28) difficult by an end user; and
change the coloration of the constant indicia element (28) to be dissimilar to the pixel coloration information outside of the threshold.

13. The full display mirror assembly (10) according to any one of claims 1 to 12, wherein the concealing body (30) is formed between the display element (20) and a viewing surface.

14. The full display mirror assembly (10) according to any one of claims 1 to 3, wherein the concealing body (30) is integrally formed with a concealment layer (54), the concealing layer (54) extending substantially entirely around the outer perimeter (22) of the display element (20).

15. The full display mirror assembly (10) according to any one of claims 1 to 13 , wherein the concealing body (30) is a glass frit on the first substrate (14).
